(19) Europäisches Patentamt / European Patent Office / Office européen des brevets

(11) **EP 3 139 520 A1**

(12) **EUROPEAN PATENT APPLICATION**

(43) Date of publication:
08.03.2017 Bulletin 2017/10

(51) Int Cl.:
*H04B 7/185* (2006.01)

(21) Application number: 15184044.4

(22) Date of filing: 07.09.2015

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(71) Applicant: **BAE Systems PLC**
**London SW1Y 5AD (GB)**

(72) Inventor: **The designation of the inventor has not yet been filed**

(74) Representative: **BAE SYSTEMS plc**
**Group IP Department**
**Farnborough Aerospace Centre**
**Farnborough**
**Hampshire GU14 6YU (GB)**

(54) **APPARATUS AND METHOD FOR COMMUNICATIONS MANAGEMENT**

(57) Apparatus and method for generating connectivity data in respect of a communications system of a moving platform, said communications system comprising at least one platform application and being configured to effect wireless data communication between said platform and another node by means of one of a plurality of supported communications links in accordance with a communications plan, wherein said apparatus is configured to:
- identify (700) a message or set of messages required to be transmitted from or received by said moving platform;
- identify available transmitters for wireless transmission of said message or set of messages and/or identify available receivers for wireless reception of said message or set of messages;
- for each identified transmitter, determine (702) a transmitter metric and/or for each identified receiver, determine (702) a receiver metric in respect of a specified attitude or orientation derived from a predicted trajectory of said moving platform; and
- define (704) a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

## Fig. 6

Determine message list — 700

702 — Transmitter analysis

Determine connectivity — 704

**Description**

This invention relates generally to an apparatus and method for communications management and information and, more particularly, but not necessarily exclusively, to an apparatus and method for use in the management of wireless communications resources between a moving platform and at least one recipient node.

There are many applications in which it is required to apply a level of management in respect of wireless data communications and the management of information, particularly between a moving platform and a remote recipient node, and maintain adequate communications therebetween for safe operation of the moving platform and mission success.

For example, in the case of aerial vehicles and, more particularly, unmanned aerial vehicles (UAVs), there is an ongoing and stringent requirement to maintain an adequate communication link between the aerial vehicle and a ground station, for example, and unexpected loss or degradation of such a communications link can be catastrophic.

A UAS is composed of three main parts, the unmanned air vehicle (UAV), unmanned control station (UCS) and support systems of the UAS (for pre-mission planning). A UAS Mission System may be composed of the following functional components/subsystems: Mission Management, Communications, Vehicle Health, Navigation System, Airspace Integration, Payload and Power Management. Multiple, different dynamic in-mission planners may reside in one or more of the above-mentioned functional components/subsystems. In a typical UAV, a dynamic route planner generates a new route, in real time, when there is a change in the operational environment, e.g. severe weather, pop-up threat, or a change of circumstances, e.g. an emergency, or a dynamic manoeuvre plan is generated to avoid an airborne obstacle. The aim is thus to maintain safety and the survivability of the aircraft by determining a feasible route and/or manoeuvre in real time, while avoiding pop-up, static and dynamic obstacles, for example.

However, the operational environment of moving platforms, at least in some applications, can be particularly challenging from a communications perspective. For example, a pilot (at a ground station) and an air vehicle may be communicating via SATCOM, when the on-board system detects an intruder and manoeuvres to avoid it. In doing so, in prior art systems, the air vehicle may cut off its link to the satellite and communications between the air vehicle and the pilot is lost. As a result, the pilot no longer has situational awareness of conditions relating to the UAV and its environment. Ideally, it is desired that communications between the UAV and the pilot is maintained regardless of the manoeuvre/orientation of the aircraft or any other unplanned event. In particular, therefore, it would be desirable to provide a method and system for generating a connectivity map that can be used by the dynamic planner, such as the route and manoeuvre planner, to generate a plan that safely manoeuvres the platform, while still maintaining connectivity with other platforms in the area, including the ground/control station, when unexpected events happen.

It is, therefore, an object of at least some aspects of the present invention to address at least one or more of these issues and, in accordance with a first aspect of the invention, there is provided apparatus for generating connectivity data in respect of a communications system of a moving platform, said communications system comprising at least one platform application and being configured to effect wireless data communication between said platform and another node by means of one of a plurality of supported communications links in accordance with a communications plan, wherein said apparatus is configured to:

- identify a message or set of messages required to be transmitted from or received by said moving platform;

- identify available transmitters for wireless transmission of said message or set of messages and/or identify available receivers for wireless reception of said message or set of messages;

- for each identified transmitter, determine a transmitter metric and/or for each identified receiver, determine a receiver metric in respect of a specified attitude or orientation derived from a predicted trajectory of said moving platform; and

- define a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

Said moving platform may, for example, comprise an airborne vehicle, and said specified attitude or orientation may then comprise a specified heading and/or banking angle of said airborne vehicle.

In an exemplary embodiment, the apparatus may be configured to calculate, in respect of each identified transmitter, said transmitter metric for at least a portion of said predicted trajectory of said moving platform by:

- obtaining a transmitter preference value and a transmitter availability value;

- estimating a link quality or obtaining a measured link quality of the respective associated communications link using data obtained from one or more systems/subsystems of said moving platform; and

- calculating said transmitter metric using said transmitter preference, transmitter availability and estimated and/or measured link quality values.

Additionally or alternatively, the apparatus may be configured to calculate, in respect of each identified receiver, said receiver metric for at least a portion of said predicted trajectory of said moving platform by:

- obtaining a receiver preference value and a transmitter availability value;

- estimating a link quality or obtaining a measured link quality of the respective associated communications link using data obtained from one or more systems/subsystems of said moving platform; and

- calculating said receiver metric using said receiver preference, transmitter availability and estimated and/or measured link quality values.

The measured link quality may be obtained using data from a wireless communications link of said moving platform and/or said other node.
Alternatively, the link quality may be estimated using one or more of mission environment data, antenna pointing, antenna location and antenna performance, and predicted attribute data representative of trajectory, attitude and position in respect of said moving platform and/or said other node.
The above-mentioned transmitter preference values and said transmitter availability values for said at least a portion of said predicted trajectory of said moving platform may be obtained from a database of stored transmitter preference and transmitter availability values; and/or the above-mentioned receiver preference values and said receiver availability values for said at least a portion of said predicted trajectory of said moving platform may be obtained from a database of stored receiver preference and receiver availability values.
In an exemplary embodiment, a transmitter metric or receiver metric may be calculated in respect of each of a plurality of portions of a current and/or said predicted trajectory of said moving platform. In this case, the connectivity metric for a communications link may be defined using said transmitter metrics or receiver metrics determined for said plurality of portions of said predicted trajectory in respect thereof.
The connectivity metric for a communications link may be equal to said transmitter/receiver metric or, a sum of a plurality of transmitter/receiver metrics, determined for a predicted trajectory of said moving platform. Alternatively, the connectivity metric may be defined as a binary value, integer values or non-integer values indicative of a quality of the respective communications link for transmitting/receiving said message or set of messages in respect of said specified heading and/or attitude of said moving platform.
The apparatus may be configured to identify a communications link having a highest transmitter/receiver metric, and define said connectivity metric based on said identified communications link.
In an exemplary embodiment, the apparatus may be configured to identify more than one communications link having the best transmitter/receiver metrics, and define a plurality of said connectivity metrics based on each said communications link.
Optionally, a jointly optimised connectivity metric may be calculated for a plurality of messages or message sets.
The apparatus may be configured to:

- identify a plurality of messages or sets of messages required to be transmitted from or received by said moving platform;

- identify available transmitters for wireless transmission or receivers for wireless reception of said plurality of messages or sets of messages;

- for each identified transmitter/receiver, determine a transmitter/receiver metric in respect of a specified attitude or orientation derived from a predicted trajectory of said moving platform;

- for all of said plurality of messages or sets of messages, define a combined connectivity metric for said specified attitude or orientation, based on said transmitter/receiver metrics, said connectivity metric being representative of a quality of one or more respective associated communications links for transmitting/receiving, by said moving platform, said plurality of messages or sets of messages in respect of said specified attitude or orientation of said moving platform.

Optionally, the apparatus may be configured to cause a combination of connectivity metrics, defined for a plurality of respective communications links in respect of a predicted trajectory of said moving platform, to be stored and/or transmitted to a dynamic route planner or dynamic obstacle avoidance planner of said moving platform in the form of a connectivity map associated with respective specified attitudes or orientations of said moving platform.

In accordance with another aspect of the present invention, there is provided a management system for a moving platform comprising a plurality of systems and at least one platform application, a dynamic route planner configured to generate a route plan or a dynamic obstacle avoidance planner configured to generate a new heading plan in respect of said moving platform, and a communications system said communications system comprising at least one platform application and being configured to effect wireless data communication between said platform and another node by means of one of a plurality of supported communications links in accordance with a communications plan, said system further comprising apparatus configured to:

- identify a message or set of messages required to be transmitted from or received by said moving platform;

- identify available transmitters for wireless transmission of said message or set of messages and/or identify available receivers for wireless reception of said message or set of messages;

- for each identified transmitter, determine a transmitter metric and/or for each identified receiver, determine a receiver metric in respect of a specified attitude or orientation derived from a predicted trajectory of said moving platform; and

- define a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

The above-mentioned apparatus may be further configured to transmit data representative of said connectivity metrics to said dynamic route planner or dynamic obstacle avoidance planner.

Alternatively, in an exemplary embodiment of the invention, the apparatus may be further configured to cause data representative of said connectivity metrics to be stored in a database, said dynamic route or obstacle avoidance planner being configured to selectively access said database and retrieve said data representative of said connectivity metrics.

The dynamic planner may be configured, in the event of a platform manoeuvre, to use said data representative of said connectivity metrics to plan a revised route or manoeuvre.

In accordance with yet another aspect of the present invention, there is provided a method for generating connectivity data in respect of a communications system of a moving platform, said communications system comprising at least one platform application and being configured to effect wireless data communication between said platform and another node by means of one of a plurality of supported communications links in accordance with a communications plan, wherein said method comprises:

- identifying a message or set of messages required to be transmitted from or received by said moving platform;

- identifying available transmitters for wireless transmission of said message or set of messages and/or identify available receivers for wireless reception of said message or set of messages;

- for each identified transmitter, determining a transmitter metric and/or for each identified receiver, determining a receiver metric in respect of a specified attitude or orientation derived from a predicted trajectory of said moving platform; and

- defining a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

These and other aspects of the present invention will be apparent from the following specific description in which embodiments of the present invention are described, by way of examples only, and with reference to the accompanying drawings, in which:

Figure 1 is a schematic block diagram illustrating a moving platform system, including apparatus according to an exemplary embodiment of the present invention;

Figure 2 is a schematic block diagram illustrating some principal features of the moving platform system of Figure 1 in more detail;

Figure 3 is a schematic block diagram illustrating a communications management system including apparatus according to an exemplary embodiment of the present invention;

Figure 4 is a schematic illustration of a moving platform together with two possible diversion routes in the event of an oncoming threat;

Figure 5 is a schematic illustration of an aircraft trajectory for a given heading;

Figure 6 is a flowchart illustrating the principal steps of a method, for use in an exemplary embodiment of the present invention, for determining a Connectivity Metric as a function of heading and banking angle; and

Figure 7 is a flowchart illustrating the principal steps of a method, for use in an exemplary embodiment of the present invention, for transmitter analysis as a function of predicted heading and banking angle.

Exemplary embodiments of the present invention provide apparatus for generating a so-called connectivity map in respect of a moving platform and its communication system, the connectivity map being intended for use by the dynamic route planner or dynamic manoeuvre planner with a view to maintaining adequate connectivity throughout a manoeuvre or change in route, in response to unplanned events. Traditionally, a dynamic route or manoeuvre plan has been generated without considering connectivity issues that may be affected by a manoeuvre or a change in route.

In contrast, in one exemplary aspect of the invention, it is envisaged that a connectivity map is generated in respect of a moving platform, wherein the connectivity map comprises a set of connectivity metrics. Each connectivity metric describes the ability of the platform to maintain communications as a result of a respective manoeuvre, as a function of predicted heading and banking angle (defined by the manoeuvre).

It is thus recognised herein, that during a planned flight, a node may need to dynamically change its course, in order to avoid an airborne obstacle, for example. The signal is lost or adversely affected by the change in heading because the aircraft antenna is pointing in an unfavourable direction or the quality of the signal in the new location is severely constrained (e.g. due to interferences/obstacles). A node needs to consider the impact on its ability to communicate when planning its next move. The above-mentioned connectivity map provides the dynamic planner (e.g. route, manoeuvre planner) with information to help the mobile node to intelligently move to a location while maintaining connectivity to a fixed and/or mobile node.

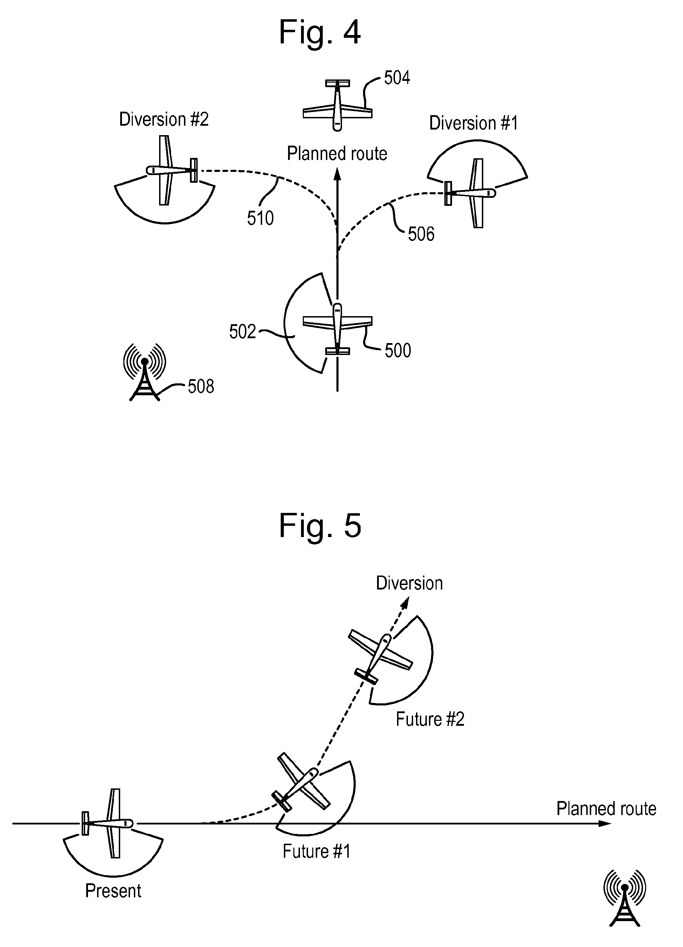

Figure 4 depicts an aircraft 500 with a transmission antenna gain pattern 502 to the left of the aircraft. The aircraft performs a manoeuvre in order to avoid a head-on obstacle 504. Following diversion route #1 (506), the aircraft no longer has line-of-sight path with the recipient 508. However, if it follows diversion route #2 (510), the aircraft 500 can maintain its communication link with the recipient 508, which could be fixed or mobile. This information is then made available to the dynamic route planner or dynamic manoeuvre planner for consideration while planning.

The operational environment of a moving platform, in many different applications, comprises a plurality of nodes (e.g. fixed/mobile control station, manned and/or unmanned air vehicles) interacting with each other via different networks, exchanging, for example, Command and Control (C2), maintaining situational/environmental awareness, and cooperatively working together. In general, a node has multiple data links/radios to enable it to interact with other nodes via different networks, as required.

In the following description of the drawings, a communications management system including apparatus according to an exemplary embodiment of the invention will be described in relation to a UAV. However, it is to be understood that the present invention is not necessarily intended to be limited in this regard and, indeed, finds application in many other types of mobile vehicle and fixed infrastructure systems in which it is required to manage communications in an intelligent manner and, for the avoidance of doubt, this would include manned and unmanned road and sea-going vehicles, ground- and airborne-control based infrastructure, as well as manned aerial vehicles.

It will be appreciated by a person skilled in the art that the proposed invention may be employed equally effectively:

- during an initial planning phase, i.e. pre-mission planning, wherein the proposed invention may be used during the route and/or communications planning phase; and

- during mission execution.

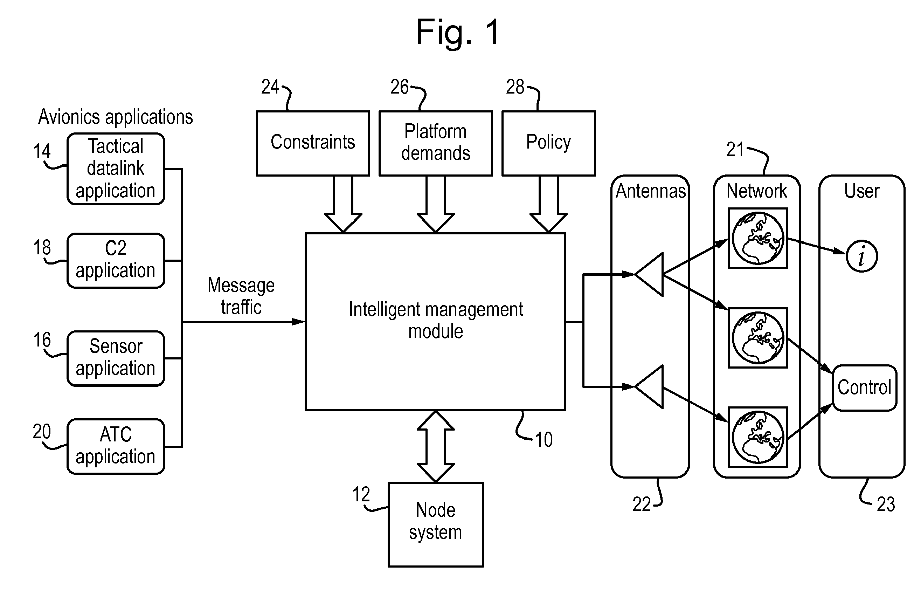

Referring to Figure 1 of the drawings, an intelligent management module 10, including apparatus according to an exemplary embodiment of an aspect of the present invention, is illustrated schematically at the centre of a typical UAV. The UAV system comprises several subsystem/systems, including communications, navigation system, prognostics and health, etc. Thus, in the schematic diagram of Figure 1, the intelligent communications management module 10 is depicted as being communicably coupled to other parts 12 of the vehicle. It can be seen from the diagram that two-way data communication is provided between the rest of the vehicle 12 and the intelligent management module 10. The node system 12 may comprise a plurality of subsystem/systems, possibly including, but not necessarily limited to, a prognostics and health system, a navigation system, a control authority, e.g. pilot or an on-board authority with executive decision functionality, a utilities management system, defensive aids system, data transfer and recording system, and an HMI (Human Machine Interface) system. Any and all of these functional components are configured to provide information, such as navigation data and detected threat, to the intelligent communications management module 10 for use in its decision making.

The intelligent communications management module 10 is also configured to receive data from a plurality of avionics applications. Such avionics applications may, for example, comprise civil and/or military applications, such as tactical datalink applications 14, sensor applications 16 (e.g. video, images, etc), mission management applications 18 (for example, command and control data), and platform management applications 20 (e.g. health of node). It will be appreciated that this is not a comprehensive list of typical or possible applications from which the intelligent communications management system may receive data and others will be apparent to a person skilled in the art, depending upon the specific application within which the present invention is to be employed.

The intelligent communications management module 10 is configured to manage multiple communications links (generally depicted in Figure 1 as 'network' 21), which may include (but are not limited to) tactical data links, satellite links, free space optical links and other data links, as will be apparent to a person skilled in the art, and it may have different antenna types (depicted generally at 22) to manage including, but not limited to, omni-directional and directional antennas, fixed or beam-steerable antennas. The antennas may be shared between communications links/radios, or with sensor systems. In the example illustrated in Figure 1, the communications from the platform antennas 22 are directed at an end user 23, for example, the remote pilot of a UAV located at a ground station. However, communications are not intended to be in any way limited in this regard.

Thus, the Intelligent Communications Management System has access to a wealth of information, such as mission environment and internal state of the node, and uses this information in its decision making. The environment represents the systems knowledge about the outside world, including network and link performance, other nodes in the network environment, dynamic threats, terrain, obstacles and weather data. The internal state is a representation of the internals of the system. It collects internal data from contributing sub-systems, such as real-time node attitude and position, current operational mode and applications' communications requirements, and it retains communications/information exchange plans, policies and information about installed resources (e.g. communications links, antennas).

A database (not shown) provides the intelligent communications management module 10 with knowledge about its mission environment and internal state, and uses this information in its decision making. The environmental data represents the system's knowledge about the outside world, including network and link performance, other nodes in the network environment, dynamic threats, terrain, obstacles and weather data. The internal state is a representation of the internal sub-systems of the system. The database collects internal data from contributing sub-systems, such as real-time node attitude and position, current operational mode and the communications requirements of individual applications, and it retains communications/information exchange plans, policies and information about installed resources (e.g. communication systems, antennas, etc). For example, the antenna gain patterns for each installed antenna on a node would be stored on each node, in a database for example, to be used by the intelligent communications management module 10 in respect of, for example, antenna selection. In this example, the antenna gain patterns are mapped with respect to the body reference frame of the node, i.e. location of the antenna on the node.

It will be appreciated that the term "database" used above, is used simply to define one or more repositories for the required data. In one exemplary embodiment, the database may be a single repository, provided on platform to be accessed by the intelligent management module 10 (or at least dedicated thereto) and other functional components/sub-systems in which all of the aforementioned data is stored for use thereby. In other exemplary embodiments, such a single repository may be used to store only a sub-set of the data, such as policies and installed antenna performance, to be accessed as required, with data that changes dynamically during a flight or mission, such as node position and operational mode, being sent directly from a relevant part of the overall platform management system to the intelligent communications management module.

Also illustrated in Figure 1, are data inputs representative of constraints 24, platform demands, and policy 28. These factors and the manner in which data representative thereof can be obtained will be known to a person skilled in the art. The policy 28, for example, may be designed by the network designer. A copy of this policy may reside within the intelligent management module 10, or accessible thereby. The policy contains a set of rules that, for example, define how communications links/radios and antennas can be used, what action to take in the event of a hardware fault and/or loss of signal, and how avionics applications can be served to support the mission. Such rules may be expressed as condition-action pairs (i.e. IF condition THEN action) and/or in look-up tables.

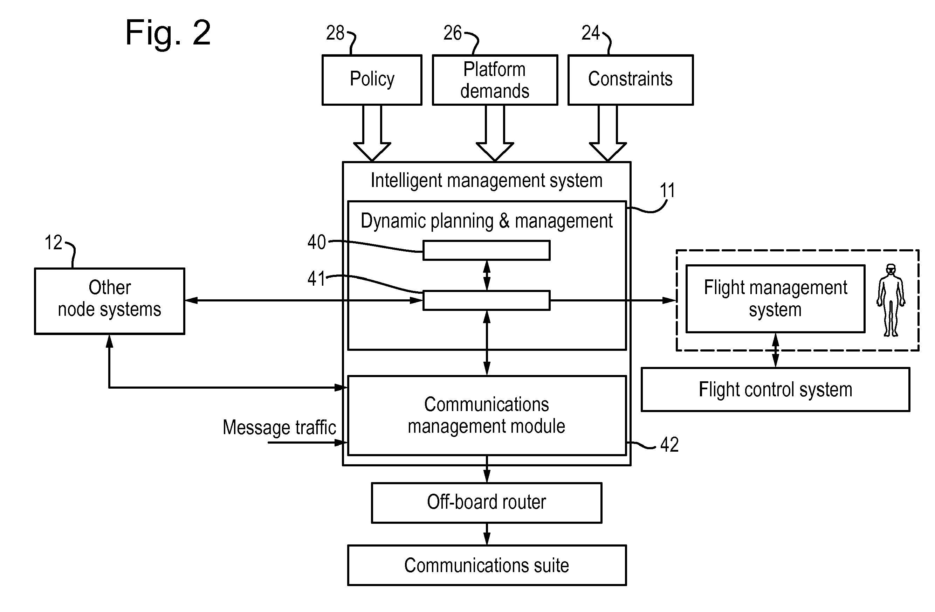

Referring now to Figure 2 of the drawings, the intelligent management module 10 comprises a dynamic planning and management module 11 and a communications management system 42. The communications management system 42 is concerned with low-level decision making. When it is unable to resolve certain communications issues, it may be configured to generate a request for the dynamic planning and management module 11 to modify plans in order to meet platform demands (i.e. higher-level planning).

In the example shown, the dynamic planning and management module 11 comprises a dynamic planner 40 and a manager 41, that provides an interface between the dynamic planner 40 and the communications management system 42, as will be described in more detail below.

Communications systems are known and used in many different applications. In exemplary embodiments of the present invention, the intelligent communications management system 10 works cooperatively with the rest of the platform's systems/subsystems to achieve the mission goal: to provide information for situational awareness and safety purposes, and to receive information used in its decision making. In other words, at least parts of the node system 12 are communicably coupled to the communications management system 42 and the dynamic planning and management module 11.

The communications management module 42 monitors and evaluates current network performance, so it is network-aware, thereby enabling it to provide comprehensive communications information for use during a mission with a view to enabling adequate connectivity to be maintained throughout.

Referring back to Figure 2 of the drawings, dynamic planners are also widely known and used in many different applications. A dynamic planner is typically provided in respect of, for example, a UAV for planning its route/path, from a start point (typically, but not always) to a defined end point (and optionally including any defined waypoints therebetween), as well as planning its manoeuvre and/or trajectory. Known dynamic planners (path, manoeuvre and trajectory) tend to base their calculation on several factors, such as terrain, threat, weather, and platform constraints. For example, a manoeuvre may be calculated to avoid an airborne obstacle or a path calculated to avoid detection of the UAV. Other types of dynamic planners for route planning in many different applications will be known to a person skilled in the art and the present invention is not necessarily intended to be limited in this regard.

However, in prior art systems, no provision is made for assessment of future connectivity in the event of such an unplanned manoeuvre or change in route. Thus, an unexpected manoeuvre can cause loss of communications between the platform and a recipient node, which can lead to loss of situational awareness for the pilot at the control station, or failure to receive information at the platform. Ideally, it is desired that communications between the platform and the pilot, as well as between the platform and other platforms, is maintained regardless of the manoeuvre/orientation of the aircraft.

In contrast, in this exemplary embodiment of the present invention, apparatus is provided (for example but not necessarily, in the communications management system 42) which receives data from other parts of the vehicle and/or from communications links/radio, and enables the above-mentioned connectivity map(s) to be generated, for use by the dynamic route planner and/or manoeuvre planner with a view to maintaining adequate communications when an unplanned event occurs.

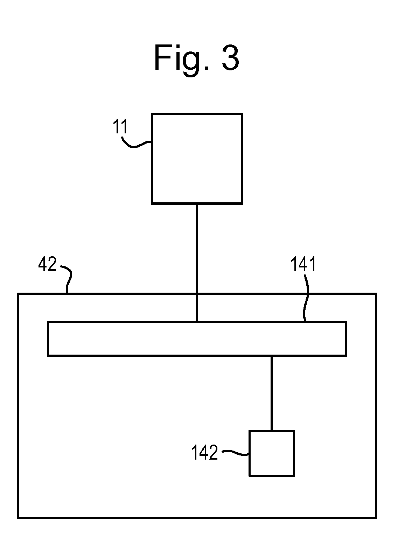

Referring to Figure 3 of the drawings, in one exemplary embodiment of the invention, a Communications Executive function 141 or other type of interface function is provided within the communications management system 42 to enable it to interface with components internal and external to the communications management system 42, and particularly in this case with the dynamic route planner 11. Note 11 can also represent a dynamic manoeuvre planner. A connectivity map generating function 142 according to an exemplary embodiment of the present invention is depicted in Figure 3 as residing within the communications management system 42, with a Communications Executive Function 141 facilitating an interface that enables connectivity map data to be transmitted from the function 142 to the dynamic route or manoeuvre planner 11. However, in other exemplary embodiments, the connectivity map generation function may reside within the communications management system 42 and be configured to transmit the connectivity map data to a database (not shown), without the aid of the Communications Executive 141, for selective access by the dynamic route or manoeuvre planner 11, as required. In yet another exemplary embodiments, the connectivity map generation function may reside elsewhere on the platform, and be configured to transmit connectivity map data to a database (not shown) for selective access by the dynamic route or manoeuvre planner 11, as required.

Thus, and as mentioned above, the proposed approach involves the generation of a connectivity metric as a function of a future predicted heading and a range of banking angles the airborne vehicle is capable of achieving. The metric calculation considers mission environment, antenna mount (i.e. location of antenna on node) and pointing of the antenna, and future predicted node trajectory, attitude and location for source and recipient. In one exemplary implementation, as explained above, the connectivity metric is provided directly to the dynamic route or manoeuvre planner, for use thereby. In alternative exemplary implementations, the connectivity metric may be stored within a database for retrieval and use by the dynamic planner, as required.

A method and system according to an exemplary embodiment of the present invention will now be described, for generating a connectivity map for a mobile platform and providing the connectivity map to an on-board dynamic planner. It will be appreciated that the resultant connectivity map can be provided directly to the dynamic route or manoeuvre planner, on request or otherwise, via the Communications Executive Function 141 or other interface function. However, in other exemplary embodiments, the connectivity map may be stored in a database for access by the dynamic route or manoeuvre planner as required, and the present invention is not necessarily intended to be limited in this regard.

To derive a connectivity map, the communications links need to be assessed in terms of their ability to maintain communications for transmission and/or reception of messages. In one embodiment, the connectivity map may jointly represent both the ability to transmit and receive, whilst in another embodiment it may represent the information for each separately.

The following describes a method for determining the connectivity map in terms of transmission. Equally, this method can also be applied when determining the connectivity map in terms of reception (i.e. evaluating each receiver as a function of a future predicted heading and range of banking angles).

The method proposed herein evaluates each transmitter as a function of a future predicted heading and the above-mentioned range of banking angles. The calculation is based on estimated and measured link performance, mission environment, aircraft performance, antenna performance and future predicted attributes, such as trajectory, attitude and position, for both the source and recipient. The Connectivity Metric is then calculated based on the Transmitter Metric. In one implementation, a jointly optimised Connectivity Metric as a function of heading and banking angle is calculated. For example, when considering more than one message, route plan message and image, a combined metric for route plan and image messages is calculated. The Connectivity Metric can be pushed to the dynamic route or manoeuvre planner. Or in another implementation, it can be stored within a database and pulled by the dynamic planner when required.

Node trajectory is made up of several segments and the 'goodness' of the transmitter for a given segment is determined. A trajectory can be made up of a present segment and one or more predicted future segments. Hence, the Transmitter Metric calculation takes into account present segment calculations and predicted future segment calculations. As an example, suppose there are three segments: one in the present and two in the future, for a given heading, as depicted schematically in Figure 5 of the drawings. For each of the three segments, the quality of the link is estimated with respect to the recipient and the overall 'goodness' of each transmitter determined. Equally, when assessing the reception at the platform, for each of the three segments, the quality of the link is estimated with respect to the other node (e.g. source) and the overall 'goodness' of each receiver determined.

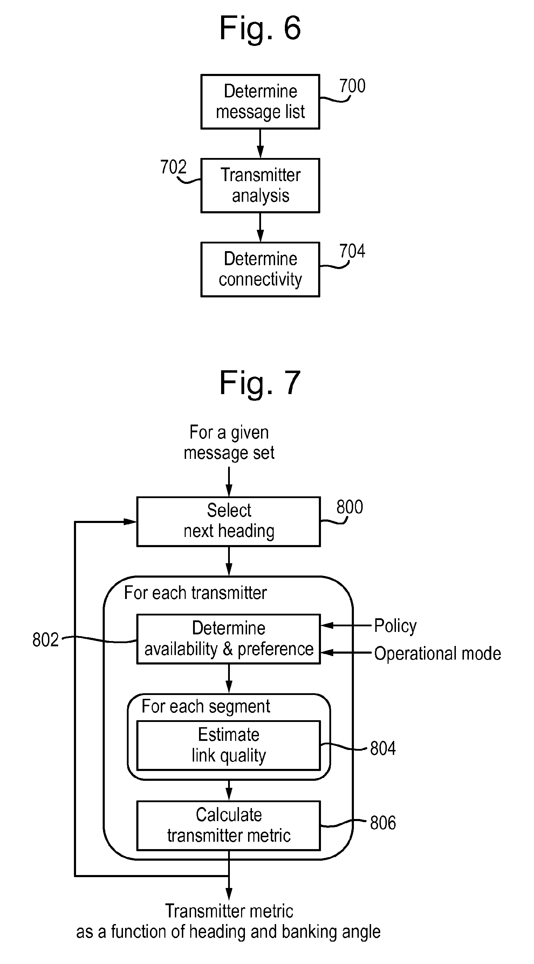

Figure 6 of the drawings is a flowchart illustrating an exemplary method for generating a Connectivity Metric as a function of a future heading. The method considers multiple factors when determining the Connectivity Metric, such as the mission environment (e.g. obstacles, terrain, and interference), installed communication links and antennas.

The method starts at step 700 by determining a minimum set of messages, which need to be serviced. This step of the method takes into account that it may not be possible to provide a service for all messages during a sense and avoid manoeuvre, for example, whereas exchange of critical messages, or a minimum set of messages, such as C2 (Command and Control), may be important to maintain situational awareness with the pilot. A message set can be defined in terms of Message Group, Message Class, or a subset of messages from a Message Class, i.e. Message Types.

A set of messages can be based on one or more message group/class/type. Messages may also be categorised in terms of common performance requirements, in terms of latency and bandwidth, for example. The serviceable messages can be dynamically determined during mission-execution based on Operational Mode and/or by the system designer at the pre-mission phase. Operational Mode represents what the platform is trying to achieve, such as: normal operation, reconnaissance, under attack, taxiing, landing, etc.

The method proceeds by determining the suitability of the communications resources (e.g. transmitter and/or antenna) in terms of preference, availability and/or compatibility for the set of the messages identified in the previous step. In another implementation, this step determines suitable antenna and transmitter combinations, e.g. for multiple antenna or shared aperture antenna implementations. It will be apparent to a person skilled in the art, that part of a wireless communications link comprises a radio transmitter and an antenna.

The method proceeds at step 702 by determining the goodness of a transmitter for a given predicted heading and banking angle. A metric is calculated to determine the goodness of a transmitter. This step considers mission environment, antenna mount (i.e. location of antenna on node) and pointing of the antenna, and future predicted node trajectory, attitude and location for source and recipient. The calculation of the Transmitter Metric takes into account present heading calculations and predicted future heading calculations.

The method proceeds at step 704 by determining the Connectivity Metric as a function of heading and banking angle. The Connectivity Metric is based on the calculated Transmitter Metric from the previous step. In one implementation, a jointly optimised Connectivity Metric as a function of heading and banking angle is calculated. For example, when considering more than one message group/class/type, a combined metric is calculated.

Figure 7 is a flowchart illustrating a method for analysing the 'goodness' of a transmitter (including associated antenna) for a given predicted heading and banking angle. The method calculates a Transmitter Metric to determine how good the transmitter would be for a given message set.

The method starts, at step 800, by selecting the next heading for a given message set and banking angle.

The method proceeds, at step 802, by determining the Transmitter Availability and Transmitter Preference. Transmitter Availability and Transmitter Preference may be specified by the system designer and/or based on performance indicators and platform demand, during mission execution. Transmitter Availability and Transmitter Preference may be set to a binary 0 and 1. For example, a transmitter may not be available due to communications equipment failure, so the Transmitter Availability may be assigned a 0-value, whereas a link may not be preferred due to emissions control restrictions or due to a conflict with another user in the operation environment, for example, so the Transmitter Preference may be assigned a 0-value. These values can be stored in a look-up table within the database and accessed when required. This step may also assess the associated antenna by determining the antenna availability and/or antenna preference and/or antenna compatibility.

The method proceeds, at step 804, by determining the quality of the link for a given segment. The link performance for each transmitter is based on estimated and sensed link performance, mission environment, antenna performance, current attributes and future predicted attributes, such as trajectory, attitude and position, for both the source and recipient.

The method proceeds, at step 806, by determining the overall 'goodness' of the transmitter along the trajectory for a given heading and banking angle. This step considers present segment calculations and predicted future segment calculations, obtained from the previous step, and calculates a Transmitter Metric. The Transmitter Metric may be calculated by multiplying Transmitter Availability, Transmitter Preference and Link Quality. The Transmitter Metric may also be calculated by multiplying Transmitter Availability, Transmitter Preference, antenna availability and/or antenna preference and/or antenna compatibility and Link Quality. It may have a value in the range of 0 and 1, where 0 represents a bad transmitter and 1 represents a good transmitter.

Once the Transmitter Metric is calculated, the Connectivity Function (shown in Figure 7) determines the Connectivity Metric for a given heading and banking angle. The Connectivity Metric for a given heading may have a value equal to the Transmitter Metric, i.e. $C(\Psi, \phi) = T(\Psi, \phi)$, where $\Psi$ and $\phi$ are heading and banking angle respectively. The Connectivity Metric may be defined as a binary code, for example 0 (bad) and 1 (good). The Connectivity Metric can be stored in look-up tables, which is then accessed by the dynamic planner, or it can be provided to the dynamic planner wrapped in a message. Furthermore, the dynamic planner may be either transmitter-aware, i.e. which transmitter can provide the best connectivity, or not transmitter-aware.

In one exemplary implementation, the Connectivity Metric for a given heading and banking angle may be calculated as the sum of the individual Transmitter Metrics for a given heading, i.e. $C(\Psi, \phi) = \sum_{i=1}^{N} T_i(\Psi, \phi)$, the reason for which will be explained. The individual transmitters may have metrics that are less than ideal, i.e. each transmitter alone cannot support the required bandwidths for the set of messages. However collectively, the transmitters can meet the required bandwidth requirement. For example, a node may have the capability to dynamically route some of the message flows via one transmitter and other message flows via another transmitter. Hence, the Connectivity Metric represents the collective of the individual transmitter metrics for a given heading.

In one exemplary implementation, a single Connectivity Metric for a given heading and banking angle is determined for each message set. The Connectivity Metric can be based on the best transmitter from a plurality of transmitters. In other words, the Connectivity Metric may have a value equal to the metric of the best transmitter, as shown in equation (1.1). For example, for C2 and 45° heading, the best transmitter is SATCOM with a metric =1. Hence, for C2 and 45° heading, the Connectivity Metric =1.

| $C(\Psi, \phi) = \max(T_1, T_2, \ldots \ldots T_N)$ where $T_N$ is the Transmitter Metric for each transmitter. | Equ. (1.1) |
| --- | --- |

In one implementation, a connectivity metric for each of transmitter and receiver as a function of heading and banking angle can be determined for each message set. In yet another implementation, a joint connectivity metric for transmitting and receiving as a function of heading and banking angle can be determined.

In another exemplary implementation, more than one Connectivity Metric for a given heading and banking angle can be determined for each message set. The metrics can be based on the best two transmitters. As an example, for C2 Message Group, there are two Connectivity Metrics for a given heading and banking angle: one metric is associated with the C2 transmitter and the other metric is for the SATCOM transmitter. Both Connectivity Metrics are made available to the dynamic planner.

In another exemplary implementation, a jointly optimised Connectivity Metric as a function of heading and banking angle can be determined. When considering more than one message set, a combined metric for the different message sets can be calculated, for a given heading and banking angle. In other words, the joint metric represents the combined benefit of each of the message sets as a function of heading and banking angle. A jointly optimised Connectivity Metric can be calculated based on a weighted sum of the Connectivity Metrics for each message set, as shown in equation (1.2). The weight factors can be set by the system designer to achieve the desired correct results. The sum of the individual weight factors can have a value of 1, so each individual weight factor has a value between 0 and 1. As an example, the individual Connectivity Metrics can be derived from equation (1.1).

| The joint optimised Connectivity metric is: | Equ. (1.2) |
| --- | --- |
| $$J(\Psi, \phi) = \sum_{i=1}^{N} W_i\, C_i(\Psi, \phi)$$ | |
| where $W_i$ is the individual weight factor. | |

It will be apparent to a person skilled in the art, from the foregoing description, that modifications and variations can be made to the described embodiments without departing from the scope of the present invention as defined by the appended claims.

**Claims**

1. Apparatus for generating connectivity data in respect of a communications system of a moving platform, said communications system comprising at least one platform application and being configured to effect wireless data communication between said platform and another node by means of one of a plurality of supported communications links in accordance with a communications plan, wherein said apparatus is configured to:

   - identify a message or set of messages required to be transmitted from or received by said moving platform;
   - identify available transmitters for wireless transmission of said message or set of messages and/or identify available receivers for wireless reception of said message or set of messages;
   - for each identified transmitter, determine a transmitter metric and/or for each identified receiver, determine a receiver metric in respect of a specified attitude or orientation derived from a predicted trajectory of said moving platform; and
   - define a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

2. Apparatus according to claim 1, wherein said moving platform comprises an airborne vehicle, and said specified attitude or orientation comprises a specified heading and/or banking angle of said airborne vehicle.

3. Apparatus according to claim 1 or claim 2, configured to calculate, in respect of each identified transmitter, said transmitter metric for at least a portion of said predicted trajectory of said moving platform by:

   - obtaining a transmitter preference value and a transmitter availability value;
   - estimating a link quality or obtaining a measured link quality of the respective associated communications link using data obtained from one or more systems/subsystems of said moving platform; and
   - calculating said transmitter metric using said transmitter preference, transmitter availability and estimated and/or measured link quality values.

4. Apparatus according to claim 1 or claim 2, configured to calculate, in respect of each identified receiver, said receiver metric for at least a portion of said predicted trajectory of said moving platform by:

   - obtaining a receiver preference value and a transmitter availability value;
   - estimating a link quality or obtaining a measured link quality of the respective associated communications link using data obtained from one or more systems/subsystems of said moving platform; and
   - calculating said receiver metric using said receiver preference, transmitter availability and estimated and/or measured link quality values.

5. Apparatus according to any of the preceding claims, wherein a transmitter metric or receiver metric is calculated in respect of each of a plurality of portions of a current and/or said predicted trajectory of said moving platform.

6. Apparatus according to claim 5, wherein said connectivity metric for a communications link is defined using said transmitter metrics or receiver metrics determined for said plurality of portions of said predicted trajectory in respect thereof.

7. Apparatus according to any of the preceding claims, wherein said connectivity metric for a communications link is equal to said transmitter/receiver metric or, a sum of a plurality of transmitter/receiver metrics, determined for a predicted trajectory of said moving platform.

8. Apparatus according to any of claims 1 to 6, wherein said connectivity metric is defined as a binary value, integer values or non-integer values indicative of a quality of the respective communications link for transmitting/receiving said message or set of messages in respect of said specified heading and/or attitude of said moving platform.

9. Apparatus according to any of the preceding claims, configured to identify a communications link having a highest transmitter/receiver metric, and define said connectivity metric based on said identified communications link.

10. Apparatus according to any of the preceding claims, configured to identify more than one communications link having the best transmitter/receiver metrics, and define a plurality of said connectivity metrics based on each said communications link.

11. Apparatus according to any of the preceding claims, wherein a jointly optimised connectivity metric is calculated for a plurality of messages or message sets.

12. Apparatus according to any of the preceding claims, configured to:

    - identify a plurality of messages or sets of messages required to be transmitted from or received by said moving platform;
    - identify available transmitters for wireless transmission or receivers for wireless reception of said plurality of messages or sets of messages;
    - for each identified transmitter/receiver, determine a transmitter/receiver metric in respect of a specified attitude or orientation derived from a predicted trajectory of said moving platform;
    - for all of said plurality of messages or sets of messages, define a combined connectivity metric for said specified attitude or orientation, based on said transmitter/receiver metrics, said connectivity metric being representative of a quality of one or more respective associated communications links for transmitting/receiving, by said moving platform, said plurality of messages or sets of messages in respect of said specified attitude or orientation of said moving platform.

13. Apparatus according to any of the preceding claims, configured to cause a combination of connectivity metrics, defined for a plurality of respective communications links in respect of a predicted trajectory of said moving platform, to be stored and/or transmitted to a dynamic route planner or dynamic obstacle avoidance planner of said moving platform in the form of a connectivity map associated with respective specified attitudes or orientations of said moving platform.

14. A management system for a moving platform comprising a plurality of systems and at least one platform application, a dynamic route planner configured to generate a route plan or a dynamic obstacle avoidance planner configured to generate a new heading plan in respect of said moving platform, and a communications system said communications system comprising at least one platform application and being configured to effect wireless data communication between said platform and another node by means of one of a plurality of supported communications links in accordance with a communications plan, said system further comprising apparatus configured to:

    - identify a message or set of messages required to be transmitted from or received by said moving platform;
    - identify available transmitters for wireless transmission of said message or set of messages and/or identify available receivers for wireless reception of said message or set of messages;
    - for each identified transmitter, determine a transmitter metric and/or for each identified receiver, determine a receiver metric in respect of a specified attitude or orientation derived from a predicted trajectory of said moving platform; and

- define a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

15. A method for generating connectivity data in respect of a communications system of a moving platform, said communications system comprising at least one platform application and being configured to effect wireless data communication between said platform and another node by means of one of a plurality of supported communications links in accordance with a communications plan, wherein said method comprises:

- identifying a message or set of messages required to be transmitted from or received by said moving platform;
- identifying available transmitters for wireless transmission of said message or set of messages and/or identify available receivers for wireless reception of said message or set of messages;
- for each identified transmitter, determining a transmitter metric and/or for each identified receiver, determining a receiver metric in respect of a specified attitude or orientation derived from a predicted trajectory of said moving platform; and
- defining a connectivity metric for said specified attitude or orientation, based on said transmitter metrics and/or receiver metrics, said connectivity metric being representative of a quality of a respective associated communications link for effecting transmission or reception by said platform of said message or set of messages in respect of said specified attitude or orientation of said moving platform.

Fig. 1

# Fig. 2

EP 3 139 520 A1

# Fig. 3

# Fig. 4

# Fig. 5

# Fig. 6

```
┌─────────────────┐
│   Determine     │ ⌐700
│  message list   │
└─────────────────┘
         │
         ▼
702 ┌─────────────────┐
 ⌐  │   Transmitter   │
    │    analysis     │
    └─────────────────┘
         │
         ▼
    ┌─────────────────┐
    │   Determine     │ ⌐704
    │  connectivity   │
    └─────────────────┘
```

# Fig. 7

For a given
message set

```
        │
        ▼
┌──────────────────────┐
│       Select         │ ⌐800
│    next heading      │
└──────────────────────┘
        │
        ▼
 For each transmitter
  ┌──────────────────────┐
  │      Determine       │ ◄── Policy
802 availability & preference│
  │                      │ ◄── Operational mode
  └──────────────────────┘
        │
        ▼
   For each segment
    ┌──────────────────┐
    │     Estimate     │ ⌐804
    │   link quality   │
    └──────────────────┘
        │
        ▼
  ┌──────────────────────┐
  │     Calculate        │ ⌐806
  │  transmitter metric  │
  └──────────────────────┘
        │
        ▼
```

Transmitter metric
as a function of heading and banking angle

Europäisches
Patentamt

European
Patent Office

Office européen
des brevets

## EUROPEAN SEARCH REPORT

Application Number

EP 15 18 4044

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 378 676 A1 (HONEYWELL INT INC [US])<br>19 October 2011 (2011-10-19)<br>* figure 1A *<br>* paragraph [0016] - paragraph [0017] *<br>* paragraph [0022] - paragraph [0023] *<br>* paragraph [0028] *<br>* paragraph [0044] - paragraph [0047] *<br>----- | 1-5,9,<br>12-15<br>6-8,10,<br>11 | INV.<br>H04B7/185 |
| X<br><br>A | WO 2010/147986 A1 (VIASAT INC [US];<br>MUKHIJA PUNIT [US])<br>23 December 2010 (2010-12-23)<br>* figure 1 *<br>* paragraph [0060] *<br>* paragraph [0062] - paragraph [0065] *<br>* paragraph [0073] - paragraph [0074] *<br>----- | 1-8,<br>12-15<br><br>9-11 | |
| A | US 2007/168090 A1 (DEMARCO STEPHEN J [US]<br>ET AL) 19 July 2007 (2007-07-19)<br>* figures 1, 5 *<br>* paragraph [0029] - paragraph [0034] *<br>----- | 1-15 | |

TECHNICAL FIELDS
SEARCHED    (IPC)

H04B

The present search report has been drawn up for all claims

| Place of search | Date of completion of the search | Examiner |
|---|---|---|
| The Hague | 10 March 2016 | Akhertouz Moreno, Y |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

                    

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 15 18 4044

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2016

| Patent document cited in search report | | Publication date | Patent family member(s) | | Publication date |
|---|---|---|---|---|---|
| EP 2378676 | A1 | 19-10-2011 | CA | 2737081 A1 | 19-10-2011 |
| | | | EP | 2378676 A1 | 19-10-2011 |
| | | | US | 2011255506 A1 | 20-10-2011 |
| WO 2010147986 | A1 | 23-12-2010 | US | 2011143654 A1 | 16-06-2011 |
| | | | WO | 2010147986 A1 | 23-12-2010 |
| US 2007168090 | A1 | 19-07-2007 | US | 2007168090 A1 | 19-07-2007 |
| | | | US | 2011137506 A1 | 09-06-2011 |

EPO FORM P0459

For more details about this annex : see Official Journal of the European Patent Office, No. 12/82